# EUROPÄISCHE PATENTSCHRIFT

(11) **EP 3 472 899 B1**
(45) Veröffentlichungstag und Bekanntmachung des Hinweises auf die Patenterteilung: **09.09.2020**
(21) Anmeldenummer: 17728540.0
(22) Anmeldetag: 07.06.2017
(51) Int. Cl.: H01R 9/24, H01R 4/48, H01R 4/26, H01R 13/11

(54) **ANSCHLUSSBLOCK FÜR EINE ELEKTRISCHE VERTEILERANLAGE**
CONNECTION BLOCK FOR AN ELECTRICAL DISTRIBUTION SYSTEM
BLOC DE RACCORDEMENT POUR UNE INSTALLATION DE DISTRIBUTION ÉLECTRIQUE

(30) Priorität: 21.06.2016 DE 202016103277 U
(43) Veröffentlichungstag der Anmeldung: 24.04.2019
(73) Patentinhaber: Weidmüller Interface GmbH & Co. KG, 32758 Detmold (DE)
(72) Erfinder: BÖNSCH, Matthias, 33659 Bielefeld (DE); RICHTS, Jörg, 33189 Schlangen (DE); JASCHKE, Bernhard, 32791 Lage (DE)
(74) Vertreter: Specht, Peter
(86) Internationale Anmeldenummer: PCT/EP2017/063878
(87) Internationale Veröffentlichungsnummer: WO 2017/220326

(56) Entgegenhaltungen:
- DE-A1-102005 058 305
- DE-U1- 20 120 811
- DE-U1- 20 120 811
- DE-U1-202010 008 559
- DE-U1-202010 008 559
- DE-U1-202011 000 137
- DE-U1-202011 000 137

## Beschreibung

Die vorliegende Erfindung betrifft einen Anschlussblock nach dem Oberbegriff des Anspruchs 1. Die Sammelschiene ist vorzugsweise als eine elektrisch gut leitende Metallschiene ausgebildet.

Zum Oberbegriff des Anspruchs 1 wird die DE 20 2011 000 137 U1 genannt, welche die Merkmale des Oberbegriffs an einem Reihenklemmenblock offenbart, der als Sammelanschlussvorrichtung ausgelegt ist.

Eine Isolationsmessung für elektrische Betriebsmittel wie Kabel ist eine Messung des Isolationswiderstands oder eine Prüfung der Isolation, um deren Sicherheit, Alterung oder Fehlerfreiheit beurteilen zu können. Für öffentliche Gebäude gibt es die Vorgabe, dass eine einfache Messung des Isolationswiderstands aller Leiter gegen Erde jedes einzelnen abgehenden Stromkreises möglich sein soll. Ein Drehstromanschluss in Niederspannungsnetzen besteht aus drei Außenleitern und dem Neutralleiter. Daher ist der Isolationswiderstand zwischen jedem aktiven Leiter und dem Schutzleiter oder Erde zu messen. Die Messung erfolgt in der Reihenfolge Schutzleiter - PE - gegen Neutralleiter - N - und dann Schutzleiter -PE - gegen alle Außenleiter - L1, L2, L3.

Für gewöhnlich wird der Isolationswiderstand einer Leitung wie folgt gemessen. Die Enden einer Leitung bzw. eines Kabels werden offen verlegt (kein Gerät angeschlossen) und es wird auf einer Seite eine hohe Prüfspannung angelegt um einen Isolationsfehler in der Leitung zu ermitteln (z.B. Leitung angebohrt oder angekratzt beim Bohren). Hierfür wird die Spannung jeweils vom aktiven Leiter gegen den PE-Kontakt angelegt (also Neutralleiter gegen PE und Außenleiter gegen PE).

In einer Anlage zur Verteilung sind meistens schon alle Leiter angeschlossen. Soll der Isolationswiderstand gemessen werden, muss der jeweilige Neutralleiter abgeklemmt werden, um ihn zu separieren. Im Verbund mit einem Anschlussblock würde das Ergebnis verfälscht, da viele Leitungen parallel geschaltet wären.

Für die Einzelmessung muss daher entweder der Neutralleiter abgeklemmt werden oder eine Trennklemme zwischengeschaltet sein, mit welcher der Neutralleiter separiert werden kann.

Die Erfindung hat die Aufgabe, dies zu vereinfachen.

Die Erfindung löst diese Aufgabe durch den Gegenstand des Anspruchs 1. Geschaffen wird ein Anschlussblock - der insbesondere modular und/oder als Anschlussleiste ausgebildet sein kann für eine elektrische Verteileranlage, insbesondere für den Anschluss von Schutz- und Nullleitern, mit einer Sammelschiene und mehreren der Sammelschiene zugeordneten Leiter-Anschlußvorrichtungen zum Anschluss jeweils wenigstens eines anzuschließenden Leiters, die jeweils wenigstens eine Stromschiene aufweisen, wobei jeweils eine leitende Verbindung zwischen der jeweiligen Stromschiene und der Sammelschiene vorgesehen ist, wobei zwischen einem Teil oder sämtlichen Leiter-Anschlussvorrichtungen und der Sammelschiene jeweils eine öffenbare und schließbare Trenneinrichtung vorgesehen ist, so dass die jeweilige leitende Verbindung zwischen der Stromschiene und der Sammelschiene trennbar und schließbar ist. Es ist ferner konstruktiv besonders einfach, dass eine oder mehrere oder jede der Trenneinrichtungen einen beweglichen Messerkontakt aufweisen und eine oder mehrere Kontaktgabeln, in welche der jeweilige Messerkontakt zum Schliessen der leitenden Verbindung hinein bewegbar ist und aus der oder denen er zum Trennen der leitenden Verbindung herausbewegbar ist. Der Begriff des Messerkontaktes ist nicht zu eng zufassen. Er umfasst auch Stiftkontakte oder flächige Kontakte.

Eine Betätigung der Trenneinrichtung (insbesondere nach Art eines Schalters oder Jumpers) ermöglicht ein Umschalten zwischen einem Schaltzustand "offen" und einem Schaltzustand "getrennt" in der leitenden Verbindung zwischen der Sammelschiene und der jeweiligen Leiter-Anschlussvorrichtung. Derart kann eine Trennklemme ersetzt werden, mit welcher der Neutralleiter ansonsten separiert werden könnte. In diesem Zustand kann der Isolationswiderstand der jeweiligen Leitung gemessen werden, da der jeweilige Neutralleiter abgetrennt worden ist.

Dabei ist es konstruktiv vorteilhaft, wenn die Trenneinrichtungen direkt in die Metallbaugruppe jeder einzelnen Leiter-Anschlußvorrichtung integriert sind.

Dies ist insbesondere vorteilhaft realisierbar, wenn die Leiter-Anschlußvorrichtungen als Federkraftanschlüsse ausgebildet sind, insbesondere als Direktsteckanschlüsse. Es ist aber auch möglich, dass die Leiter-Anschlußvorrichtungen als Schraubanschlüsse, Zugfederanschlüsse, Löt- oder Steckanschlüsse oder isolationsdurchdringende Kontakte oder als Flachstecker oder in noch anderer Anschlusstechnik ausgebildet sind.

Dabei ist es denkbar, dass der jeweilige Messerkontakt als zu den der jeweiligen Leiter-Anschlussvorrichtung separates Element ausgebildet ist. Besonders kostengünstig ist es hingegen, wenn der jeweilige Messerkontakt einstückig mit der jeweiligen Stromschiene der Leiter-Anschlussvorrichtungen ausgebildet ist.

Nach einer Variante ist vorgesehen, dass der Messerkontakt oder der Gabel- und/oder Tulpenkontakt als relativ zu der Sammelschiene und der Stromschiene bewegliches, insbesondere drehbares oder verschiebliches Element ausgebildet ist. Dann ist es weiter vorteilhaft, wenn durch das Bewegen außen am Gehäuse des Anschlussblocks sichtbar wird, ob die leitende Verbindung zwischen diesen Elementen geschlossen oder geöffnet ist.

Vorteilhafte Ausgestaltungen sind den Unteransprüchen zu entnehmen.

Es ist konstruktiv einfach und kostengünstig, wenn eine oder mehrere oder sämtliche der Trenneinrichtungen jeweils direkt in die Metallbaugruppe jeder einzelnen Leiter-Anschlußvorrichtung integriert sind.

Nachfolgend wird die Erfindung unter Bezugnahme auf die Zeichnungen anhand von Ausführungsbeispielen näher erläutert, wobei weitere Vorteile der Erfindung deutlich werden. Es zeigt:
- Fig. 1: eine perspektivische Ansicht eines geöffneten Verteilerkastens;
- Fig.2: eine perspektivische Ansicht eines Anschlussblocks des Verteilerkastens aus Fig. 1;
- Fig. 3 in a) bis d): verschiedene Ansichten eines Abschnitts eines weiteren Anschlussblocks und in e) und f) Schnitte durch den Anschlussblock aus a) bis d) senkrecht zu den Linien A-A bzw. B-B aus c);
- Fig. 4: in a) eine vergrößerte Ansicht der Fig. 3e) und in b) eine vergrößerte Ansicht der Fig. 3f);
- Fig. 5 in a) und b): verschiedene Ansichten eines Abschnitts eines weiteren Anschlussblocks und in c) und d) Schnitte durch den Anschlussblock aus a) senkrecht zu den Linien A-A bzw. B-B aus a) sowie in e) eine perspektivische Ansicht einer Metallbaugruppe des Anschlussblocks aus a) und b));
- Fig. 6 in a): eine vergrößerte Ansicht der Fig. 5c), in b) eine vergrößerte Ansicht der Fig. 5d) und in c) eine vergrößerte Ansicht der Fig. 5e);
- Fig. 7: in a) bis e) verschiedene Ansichten eines Abschnitts eines weiteren Anschlussblock und in c) und d) Schnitte durch den Anschlussblock aus a) senkrecht zu den Linien A-A bzw. B-B aus a sowie in e) eine perspektivische Ansicht einer Metallbaugruppe des Anschlussblocks aus a) und b));
- Fig. 8: eine vergrößerte Ansicht der Fig. 5e);
- Fig. 9 in a): eine perspektivische Ansicht einer Metallbaugruppe eines weiteren (ansonsten hier nicht dargestellten) Anschlussblock und in b) eine Seitenansicht eines Teils der Anordnung aus a) und in c) die Anordnung aus b) in einer weiteren Schaltstellung.

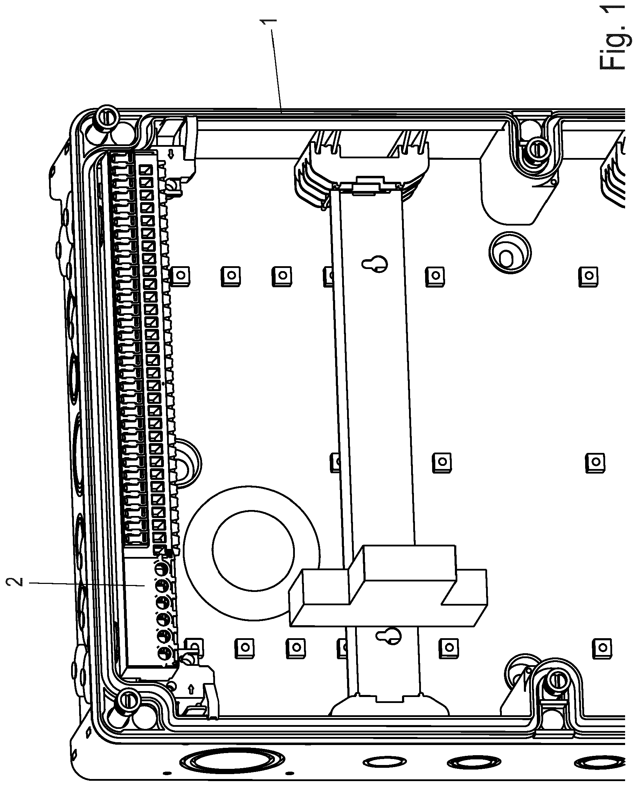

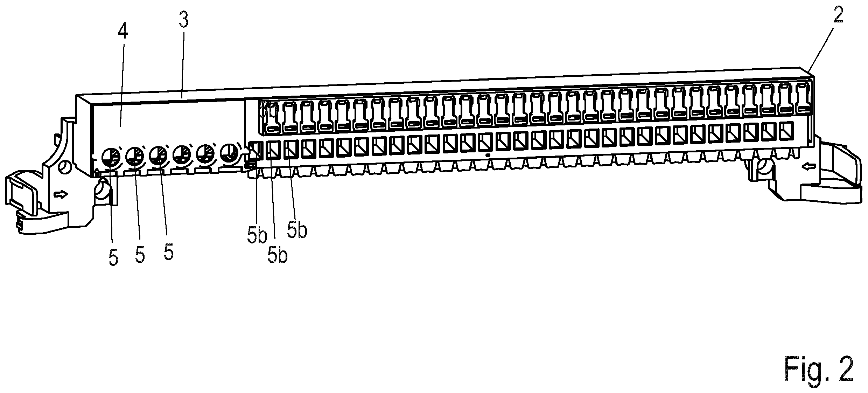

Fig. 1 zeigt eine perspektivische Ansicht eines geöffneten Verteilerkastens 1, in dessen Inneren u.a. einen Anschlussblock 2 angeordnet ist. Dieser Anschlussblock 2 ist auch separat in Fig. 2 dargestellt. Der Anschlussblock 2 weist ein ein- oder mehrteiliges Gehäuse 3 mit einer Abdeckung 4 auf. Die Abdeckung 4 ist mit mehreren Öffnungen 5a, 5b bzw. Durchbrüchen versehen. Durch diese Öffnungen 5a, 5b sind Enden elektrischer Leiter in das Gehäuse 3 einsteckbar. Das Gehäuse 3 kann auch aus aneinandergereihten Einzelgehäusen bestehen.

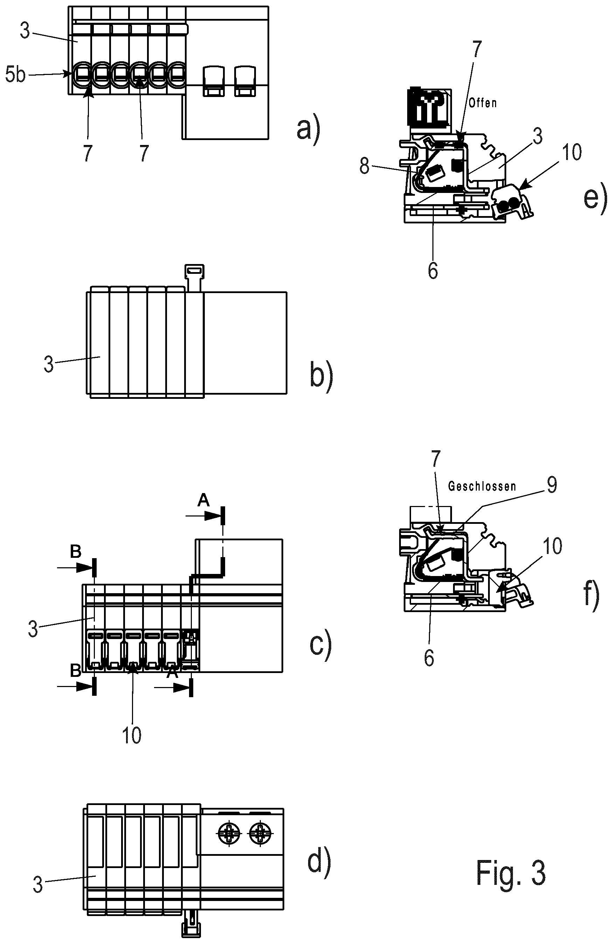

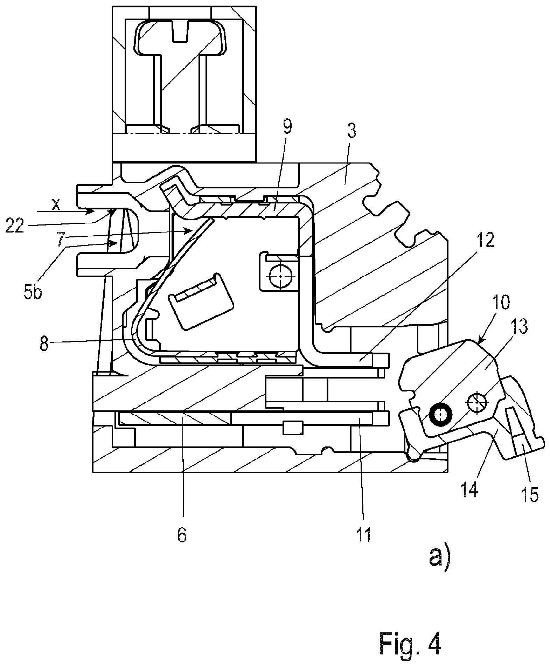

In dem Gehäuse 3 sind - siehe z.B. Fig. 3a-f und 4a-b - eine Sammelschiene 6 und eine Mehrzahl von Leiter-Anschlußvorrichtungen 7 vorgesehen. An jede der Leiter-Anschlußvorrichtungen 7 ist jeweils ein elektrischer Leiter anschließbar. Jeder der zumindest Leiter-Anschlußvorrichtungen 7 ist wenigstens eine Öffnung nach Art der Öffnungen 5b zum Einstecken eines Leiterendes zugeordnet.

Die Leiter-Anschlußvorrichtungen 7 sind an sich in beliebiger Anschlusstechnik ausführbar. Bevorzugt werden die Leiter-Anschlußvorrichtungen als Federkraftanschlüsse ausgebildet, beispielsweise als Direktsteckanschlüsse. Denkbar sind aber auch Ausgestaltungen als Schraubanschlüsse, Zugfederanschlüsse oder als isolationsdurchdringende Kontakte ausgebildete Leiter-Anschlußvorrichtungen (hier nicht dargestellt).

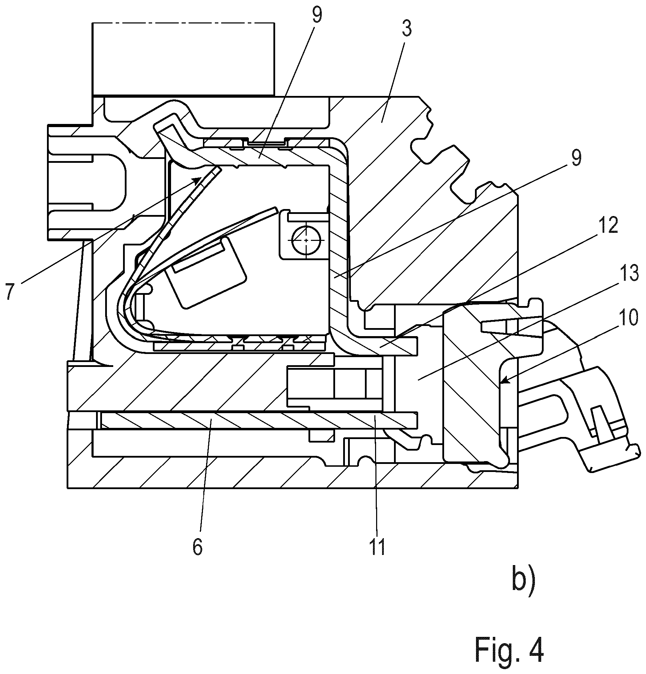

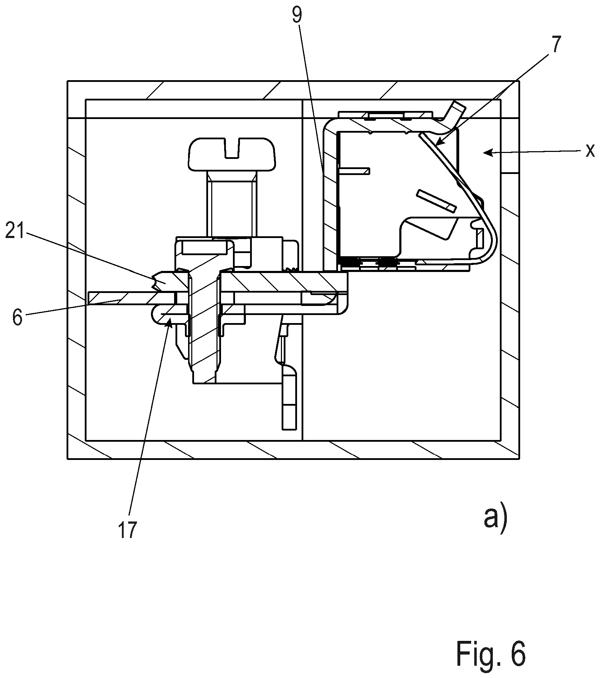

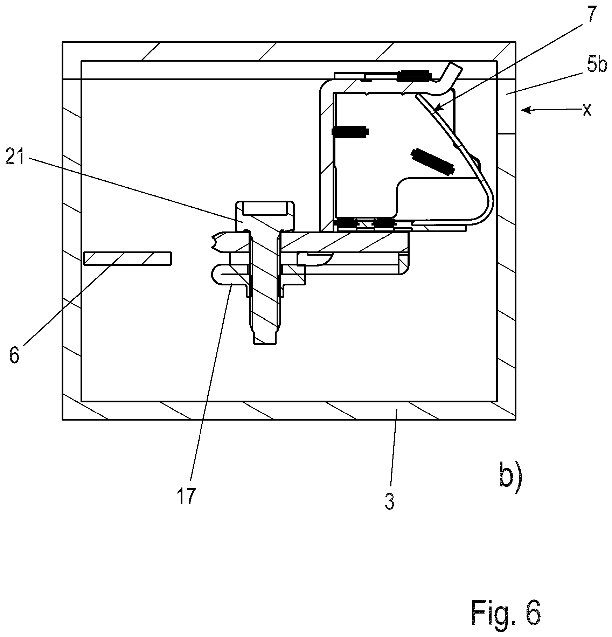

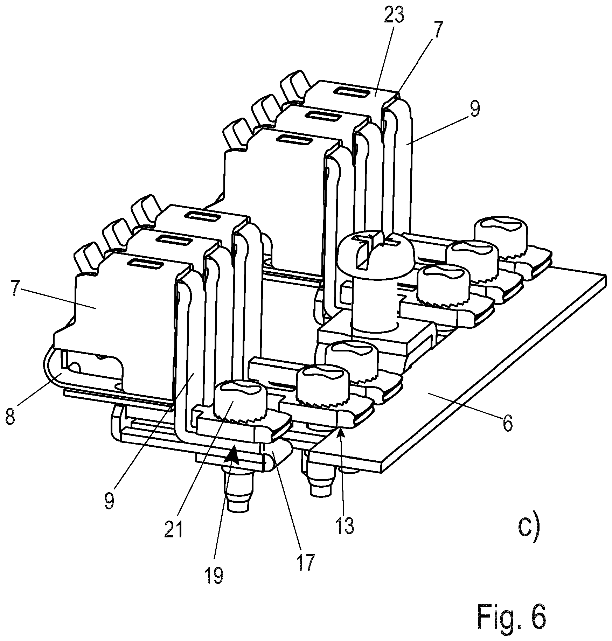

Nach sämtlichen Figuren sind die Leiter-Anschlußvorrichtungen 7 als Direktsteckanschlüsse ausgebildet. Die Direktsteckanschlüsse weisen - siehe insbesondere Fig. 4a und 4b- jeweils zumindest eine (vorzugsweise V-förmige) Klemmfeder 8 auf und eine Stromschiene 9 sowie ggf. auch einen Klemmkäfig 23 (siehe z.B. Fig. 6a-c). Die Klemmfeder 8 ist dazu ausgelegt, ein Leiterende gegen die Stromschiene 9 zu drücken. Dieses Leiterende kann hier durch einen Einführtrichter 22 zur Klemmstelle zwischen der Klemmfeder 8 un der Stromschiene 9 geführt werden (in einer Einführrichtung X). Da die anzuschließenden Leiter relativ formstabil sind, ist hier kein Betätigungselement zum Öffnen der Klemmfeder vorgesehen. Ein solches kann aber optional vorgesehen sein.

Die Stromschiene 9 ist über eine leitende Verbindung mit der Sammelschiene 6 verbindbar. Dabei weist die leitende Verbindung eine öffenbare und schließbare Trenneinrichtung 10 auf, so dass die leitende Verbindung zwischen der Stromschiene 9 und der Sammelschiene 6 aufgetrennt bzw. geöffnet und wieder geschlossen werden kann.

Eine Betätigung der Trenneinrichtung 10 ermöglicht ein Umschalten zwischen einem Schaltzustand "offen" und einem Schaltzustand "getrennt". Derart kann eine Trennklemme ersetzt werden, mit welcher der Neutralleiter ansonsten separiert werden könnte.

Dabei ist die Trenneinrichtung 10 direkt das Gehäuse 3 oder eines der Einzelgehäuse und auch in die Metallbaugruppe jeder einzelnen Leiter-Anschlußvorrichtung 7 integriert. Dies hat den Vorteil, dass jeder Leiter bzw. jedes Leiterende einzeln von dem Potential der Sammelschiene 6 getrennt werden kann, um in einer übergeordneten Verteileranlage, zu welcher der Anschlussblock 1 gehört, einen Isolationswiderstand zu messen, ohne dass hierzu eine separate Trennklemme - insbesondere mit einem separaten Gehäuse - erforderlich wäre.

Die Trenneinrichtung 10 zur Realisierung kann auf verschiedenste Weise konstruktiv umgesetzt werden. Nachfolgend werden einige beispielhafte und auch vorteilhafte Ausführungen erläutert, auf welche die Erfindung aber nicht beschränkt ist.

So ist es nach einer Variante - siehe Fig. 4a und 4b - zweckmäßig, wenn sowohl die Sammelschiene 6 als auch die Stromschiene 9 jeweils einen Federkontakt 11, 12 aufweisen, beispielsweise eine Federgabel, in welche ein Messerkontakt 13 einführbar ist.

Der Messerkontakt 13 kann abschnittsweise mit einer Isolierung 14 versehen sein. Die Isolierung 14 kann wiederum eine Betätigungskontur 15 wie einen Schlitz aufweisen, um ein Betätigungswerkzeug, insbesondere einen Schraubendreher 16 (ergänzend siehe ein anderes Ausführungsbeispiel: Fig. 6a-c), ansetzen zu können, um den Messerkontakt 13 zwischen einer Offen-Stellung (siehe z.B. Fig. 4a) und einer Geschlossen-Stellung (siehe z.B. Fig. 4b) zu bewegen.

Der Messerkontakt 13 kann dazu nach einer Variante (siehe z.B. die Fig. 4a und 4b) an dem Gehäuse 3 schwenkbar gelagert oder schwenkbar abgestützt sein, so dass er zwischen der Offen- bzw. Getrennt-Stellung (siehe z.B. Fig. 4a) und der Geschlossen-Stellung bzw. Kontaktstellung (siehe z.B. Fig. 4b) verschwenkbar ist. Dann ist es weiter vorteilhaft, wenn durch das Bewegen des Messerkontaktes 13 außen am Gehäuse 3 der Anschlussblock sichtbar wird, ob die leitende Verbindung zwischen der Sammelschiene 6 und der Stromschiene 9 geschlossen oder geöffnet ist (siehe Fig. 4a und b).

Der Messerkontakt 13 kann als separates Element zu der Stromschiene 9 und der Sammelschiene 6 ausgebildet sein.

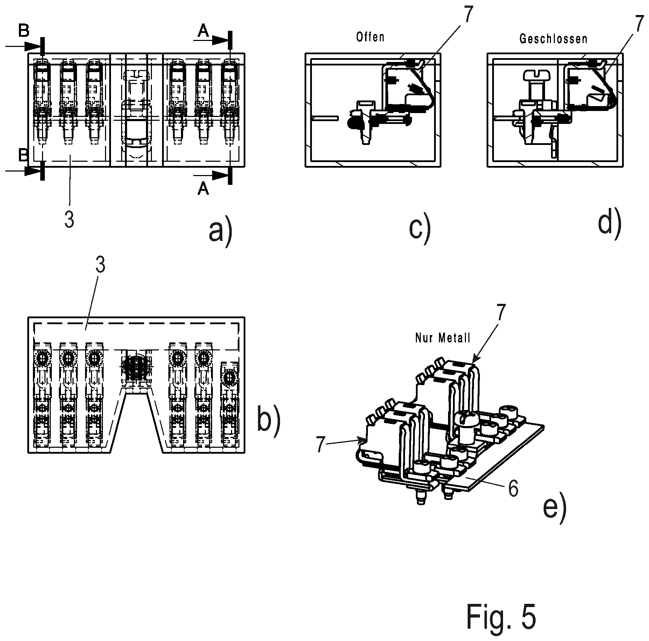

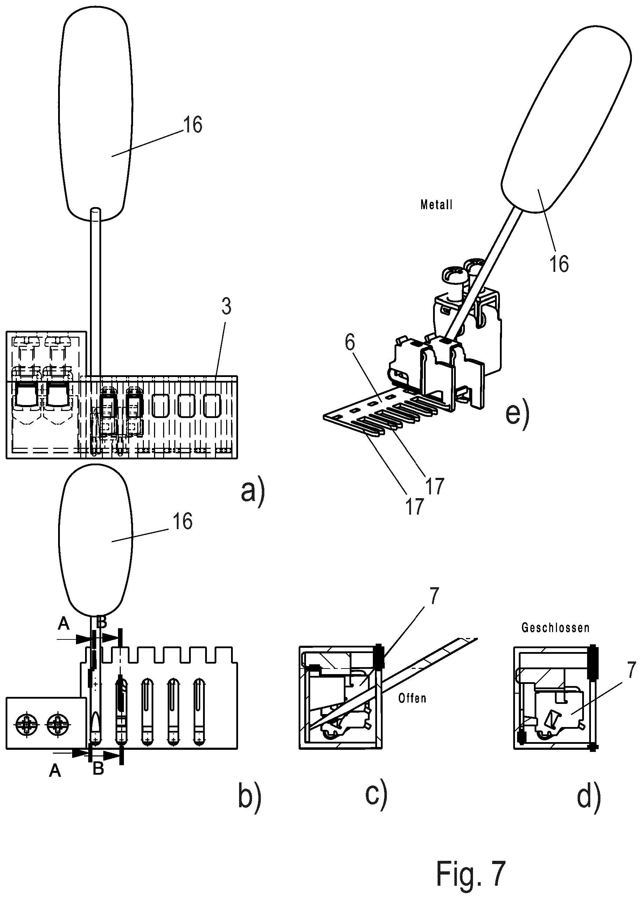

Der Messerkontakt 13 kann nach einer Variante auch nicht verschwenkbar sondern im Gehäuse 3 verschieblich ausgeführt sein, so dass er zwischen der Offen-Stellung (siehe z.B. Fig. 5a- e, insbesondere Fig. 5c und Fig. 5e sowie Fig. 7c, 7e) und einer Geschlossen-Stellung (siehe z.B. Fig. 5d und Fig. 5e sowie Fig. 7d, 7e) verschiebbar ist. Hierzu kann wiederum ein Schraubendreher 16 genutzt werden.

Der Messerkontakt 13 kann dabei ferner auch (siehe Fig. 6a-c oder 7a-c) als einstückiges Element mit der Stromschiene 9 oder der Sammelschiene 6 (z.B: als Rand der Sammelschiene) ausgebildet sein. In diesem Fall ist es zweckmäßig, wenn das korrespondierende Kontaktelement - die Sammelschiene 6 oder die Stromschiene 9 (vorzugsweise direkt oder indirekt) einen Federkontakt - beispielsweise eine federnde oder mittels einer Klemmschraube 21 (Fig. 6a-c) wirkende Kontaktgabel 17 - aufweisen und wenn der korrespondierende andere Kontakt als Messerkontakt 18 direkt an der Stromschiene 9 oder der Sammelschiene 6 (vorzugsweise einstückig) ausgebildet ist. Dies erfordert, dass dann eines der Elemente Stromschiene 9 oder Sammelschiene 8 selbst relativ zum jeweils anderen Element beweglich ist. So kann - siehe Fig. 5 bis 9 - vorgesehen sein, jede entsprechende Leiter-Anschlußvorrichtung 7 im Gehäuse 3 vorzugsweise linear verschieben zu können. Nach Fig. 6a-c weist die Stromschiene 9 insofern (indirekt) einen Schaubanschluss 19 auf, in welchen der Rand der Sammelschiene 6 als Messerkontakt 13 einführbar ist. Mittels einer Klemmschraube 21 kann ein Leiter mit einer notwendigen Kontaktkraft gegen die Sammelschiene 3 gepresst bzw. gezogen werden. Alternativ könnte auch eine Federgabel an der Stromschiene 9 ausgebildet sein.

Der Messerkontakt 13 kann alternativ auch als separates Element zu der Stromschiene 9 und der Sammelschiene 6 ausgebildet sein (in Fig. 5 bis 9 nicht dargestellt) und an dieser befestigt sein.

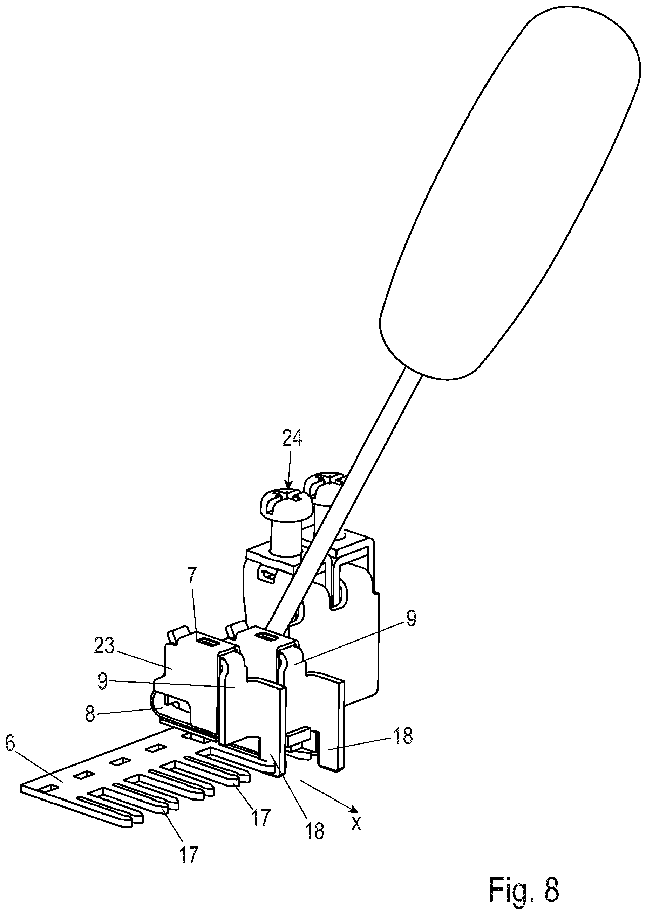

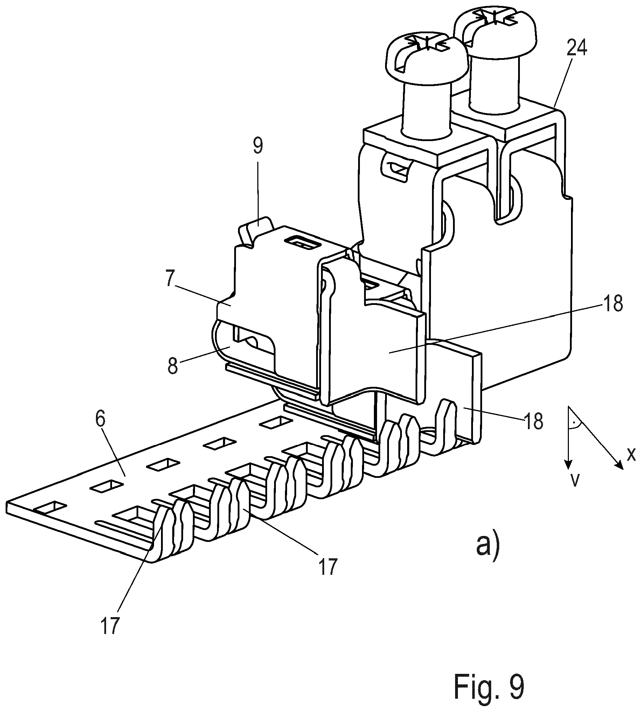

Nach Fig. 7a-e und 9a-c weist die Sammelschiene 6 im Randbereich (hier federnde) Kontaktgabeln 17 auf, in welche ein einstückig mit der jeweiligen Stromschiene 8 der Trenneinrichtungen ausgebildeter Messerkontakt 18 einführbar ist. Nach Fig. 7a-e und 9a-c ist jeder der mit den Messerkontakten 18 versehenen Leiter-Anschlußvorrichtungen 7 relativ zur Sammelschiene 6 beweglich, insbesondere verschieblich geführt, um die Trennstelle auszubilden und um gegenüber der Sammelschiene 6 eine galvanische Trennung bzw. die Getrennt-Stellung realisieren zu können. Fig. 8 zeigt, dass im Anschluss an die Leiter-Anschlussvorrichtungen 7 in die Metallbaugruppe der Sammelschiene 6 weitere Leiter-Anschlussvorrichtungen 24 integriert sein können, um ein Potential an die Metallbaugruppe der Sammelschiene 6 zu legen.

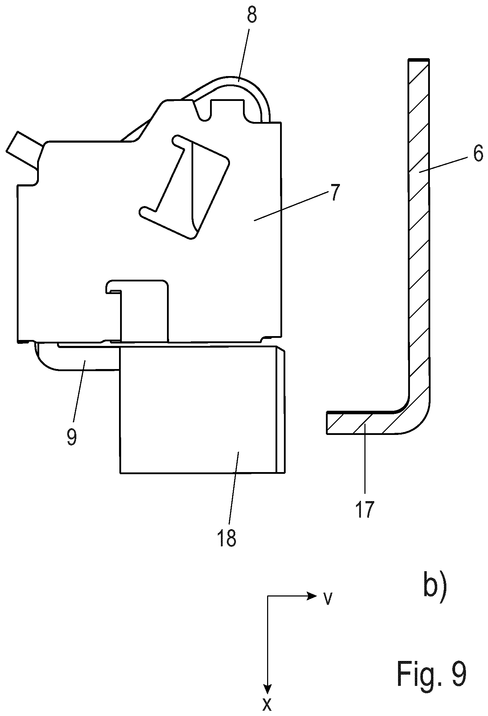

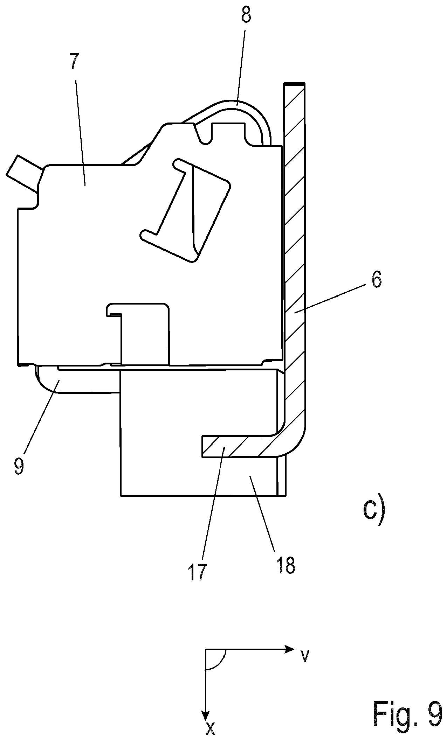

Nach Fig. 9a-c ist die Verschieberichtung V der Leiter-Anschlußvorrichtungen 7 senkrecht zur Steckrichtung X und nach Fig. 9 parallel zur Steckrichtung X zum Einstecken des Leiters in die Leiter-Anschlußvorrichtungen 7. Daher sind die Enden der Kontaktgabeln 17 an der Sammelschiene 6 jeweils in diese Richtungen orientiert bzw. ausgerichtet. Mischformen dieser Konstruktionen sind ebenfalls denkbar.

**Bezugszeichenliste**

| | |
|---|---|
| Verteilerkasten | 1 |
| Anschlussblock | 2 |
| Gehäuse | 3 |
| Abdeckung | 4 |
| Öffnungen | 5 |
| Sammelschiene | 6 |
| Leiter-Anschlußvorrichtungen | 7 |
| Klemmfeder | 8 |
| Stromschiene | 9 |
| Trenneinrichtung | 10 |
| Kontaktgabel | 11, 12 |
| Messerkontakt | 13 |
| Isolierung | 14 |
| Betätigungskontur | 15 |
| Schraubendreher | 16 |
| Kontaktgabel | 17 |
| Messerkontakt | 18 |
| Schaubanschluss | 19 |
| Klemmschraube | 21 |
| Einführtrichter | 22 |
| Klemmkäfig | 23 |
| Leiter-Anschlußvorrichtungen | 24 |

## Patentansprüche

1. Anschlussblock für eine elektrische Verteileranlage, insbesondere für den Anschluss von Schutz- und Nullleitern, mit einer Sammelschiene (6) und mehreren der Sammelschiene (6) zugeordneten Leiter-Anschlussvorrichtungen (7) zum Anschluss jeweils wenigstens eines anzuschließenden Leiters, die jeweils wenigstens eine Stromschiene (9) aufweisen, wobei jeweils eine leitende Verbindung zwischen der jeweiligen Stromschiene (9) und der Sammelschiene (6) vorgesehen ist, **wobei** zwischen einem Teil oder sämtlichen Leiter-Anschlussvorrichtungen (7) und der Sammelschiene (6) jeweils eine öffenbare und schließbare Trenneinrichtung (10) vorgesehen ist, so dass die jeweilige leitende Verbindung zwischen der Stromschiene (9) und der Sammelschiene (6) trennbar und schließbar ist,
**dadurch gekennzeichnet, dass** eine oder mehrere der Trenneinrichtungen (10) einen beweglichen Messerkontakt (13, 18) aufweisen und eine(n) oder mehrere Kontaktgabeln/Tulpenkontakte (11, 12, 17), in welche der jeweilige Messerkontakt (13, 18) zum Schliessen der zwischen der Stromschiene (9) und der Sammelschiene (6) angeordneten leitenden Verbindung hinein bewegbar ist und aus der oder denen er zum Trennen der genannten eitenden Verbindung herausbewegbar ist.

2. Anschlussblock nach Anspruch 1, **dadurch gekennzeichnet, dass** die Trenneinrichtungen (10) direkt in die Metallbaugruppe jeder einzelnen Leiter-Anschlußvorrichtung (7) integriert sind.

3. Anschlussblock nach Anspruch 1 oder 2, **dadurch gekennzeichnet, dass** die Leiter-Anschlußvorrichtungen (7) als Federkraftanschlüsse ausgebildet sind, insbesondere als Direktsteckanschlüsse.

4. Anschlussblock nach einem der vorstehenden Ansprüche, **dadurch gekennzeichnet, dass** die Leiter-Anschlußvorrichtungen (7) als Schraubanschlüsse, Zugfederanschlüsse, Löt- oder Steckanschlüsse oder isolationsdurchdringende Kontakte oder als Flachstecker ausgebildet sind.

5. Anschlussblock nach einem der vorstehenden Ansprüche, **dadurch gekennzeichnet, dass** der jeweilige Messerkontakt (13) als zu den der jeweiligen Leiter-Anschlussvorrichtung (7) separates Element ausgebildet ist.

6. Anschlussblock nach einem der Ansprüche 1 bis 4, **dadurch gekennzeichnet, dass** der jeweilige Messerkontakt (13, 18) einstückig mit der jeweiligen Stromschiene (9) der Leiter-Anschlussvorrichtungen (7) ausgebildet ist.

7. Anschlussblock nach einem der vorstehenden Ansprüche, **dadurch gekennzeichnet, dass** der jeweilige Messerkontakt (13, 18) einstückig mit der jeweiligen Sammelschiene (6) ausgebildet ist.

8. Anschlussblock nach einem der vorstehenden Ansprüche, **dadurch gekennzeichnet, dass** eine oder mehrere der Kontaktgabeln/Tulpenkontakte (11, 12, 17) einstückig mit der Sammelschiene (6) ausgebildet ist/sind.

9. Anschlussblock nach einem der vorstehenden Ansprüche, **dadurch gekennzeichnet, dass** eine oder mehrere der Kontaktgabeln/Tulpenkontakte (11, 12, 17) einstückig mit der Stromschiene (9) ausgebildet ist/sind.

10. Anschlussblock nach einem der vorstehenden Ansprüche, **dadurch gekennzeichnet, dass** die Leiter-Anschlussvorrichtungen (7) einzeln separat relativ zu einem Gehäuse (3) der Sammelschiene (6) beweglich angeordnet sind.

11. Anschlussblock nach einem der vorstehenden Ansprüche, **dadurch gekennzeichnet, dass** der Messerkontakt (13, 18) und/oder der Gabel- und/oder Tulpenkontakt (11, 12, 17) als separates Element zu der Stromschiene (9) und der Sammelschiene (6) ausgebildet ist.

12. Anschlussblock nach einem der vorstehenden Ansprüche, **dadurch gekennzeichnet, dass** der Messerkontakt (13, 18) und/oder der Gabel- und/oder Tulpenkontakt (11, 12, 17) als zu der Stromschiene (9) und der Sammelschiene (6) relativ bewegliches Element ausgebildet ist.

13. Anschlussblock nach einem der vorstehenden Ansprüche, **dadurch gekennzeichnet, dass** der Messerkontakt (13, 18) oder der Gabel- und/oder Tulpenkontakt (11, 12, 17) als drehbares oder verschiebliches Element ausgebildet ist.

14. Anschlussblock nach einem der vorstehenden Ansprüche, **dadurch gekennzeichnet, dass** er als Anschlussleiste ausgebildet ist.

## Claims

1. Terminal block for an electrical distribution system, in particular for connecting protective and neutral conductors, comprising a busbar (6) and a plurality of conductor connection devices (7) for connecting in each case at least one conductor to be connected, said conductor connection devices being associated with the busbar (6) and having in each case at least one conductor rail (9), wherein in each case a conductive connection is provided between the respective conductor rail (9) and the busbar (6), wherein in each case an isolating device (10) which can be opened and closed is provided between some or all of the conductor connection devices (7) and the busbar (6), so that the respective conductive connection between the conductor rail (9) and the busbar (6) can be isolated and can be closed, **characterized in that** one or more of the isolating devices (10) has a movable blade contact (13, 18) and one or more contact forks/tulip contacts (11, 12, 17), into which the respective blade contact (13, 18) can be moved in order to close the conductive connection arranged between the conductor rail (9) and the busbar (6), and out of which it can be moved in order to isolate said conductive connection.

2. Terminal block according to claim 1, **characterized in that** the isolating devices (10) are integrated directly in the metal assembly of each individual conductor connection device (7).

3. Terminal block according to claim 1 or 2, **characterized in that** the conductor connection devices (7) are designed as spring cage connections, in particular as direct plug-in connections.

4. Terminal block according to any one of the preceding claims, **characterized in that** the conductor connection devices (7) are designed as screw connections, tension clamp connections, soldered or plug-in connections or insulation displacement contacts or as flat plugs.

5. Terminal block according to any one of the preceding claims, **characterized in that** the respective blade contact (13) is designed as an element separate from that of the respective conductor connection device (7).

6. Terminal block according to any one of claims 1 to 4, **characterized in that** the respective blade contact (13, 18) is designed in one piece with the respective conductor rail (9) of the conductor connection devices (7).

7. Terminal block according to any one of the preceding claims, **characterized in that** the respective blade contact (13, 18) is designed in one piece with the respective busbar (6).

8. Terminal block according to any one of the preceding claims, **characterized in that** one or more of the contact forks/tulip contacts (11, 12, 17) is/are designed in one piece with the busbar (6).

9. Terminal block according to any one of the preceding claims, **characterized in that** one or more of the contact forks/tulip contacts (11, 12, 17) is/are designed in one piece with the conductor rail (9).

10. Terminal block according to any one of the preceding claims, **characterized in that** the conductor connection devices (7) are arranged such as to be individually and separately movable relative to a housing (3) of the busbar (6).

11. Terminal block according to any one of the preceding claims, **characterized in that** the blade contact (13, 18) and/or the fork and/or tulip contact (11, 12, 17) is designed as an element separate from the conductor rail (9) and the busbar (6).

12. Terminal block according to any one of the preceding claims, **characterized in that** the blade contact (13, 18) and/or the fork and/or tulip contact (11, 12, 17) is designed as an element which is movable relative to the conductor rail (9) and the busbar (6).

13. Terminal block according to any one of the preceding claims, **characterized in that** the blade contact (13, 18) or the fork and/or tulip contact (11, 12, 17) is designed as a rotatable or displaceable element.

14. Terminal block according to any one of the preceding claims, **characterized in that** it is designed as a terminal strip.

## Revendications

1. Bloc de raccordement pour une installation de distribution électrique, en particulier pour le raccordement de conducteurs de protection et neutres, avec une barre collectrice (6) et plusieurs dispositifs de raccordement de conducteurs (7) associés à la barre collectrice (6), destinés à raccorder chacun au moins un conducteur à raccorder qui présentent chacun au moins une barre conductrice (9), une liaison conductrice étant prévue entre chaque barre conductrice (9) et la barre collectrice (6), dans lequel est prévu entre une partie au moins de tous les dispositifs de raccordement de conducteurs (7) et la barre collectrice (6) correspondante un dispositif de sectionnement (10) pouvant être ouvert et fermé, de sorte que la liaison conductrice entre la barre conductrice (9) et la barre collectrice (6) peut être ouverte et fermée, **caractérisé en ce qu'**un ou plusieurs des dispositifs de sectionnement (10) présentent un contact à couteau mobile (13, 18) et une ou plusieurs fourches de contact/contacts tulipes (11, 12, 17) dans lesquels le contact à couteau (13, 18) correspondant peut être introduit pour fermer la liaison conductrice disposée entre la barre conductrice (9) et la barre collectrice (6) et dont il peut être retiré pour ouvrir ladite liaison conductrice.

2. Bloc de raccordement selon la revendication 1, **caractérisé en ce que** les dispositifs de sectionnement (10) sont intégrés directement dans le sous-ensemble métallique de chaque dispositif de raccordement de conducteurs (7).

3. Bloc de raccordement selon la revendication 1 ou 2, **caractérisé en ce que** les dispositifs de raccordement de conducteurs (7) sont conformés comme des raccords à ressort, en particulier comme des raccords directs.

4. Bloc de raccordement selon l'une des revendications précédentes, **caractérisé en ce que** les dispositifs de raccordement de conducteurs (7) sont conformés comme des raccords à vis, des raccords à ressort de traction, des raccords brasés ou enfichés ou des contacts traversant une isolation ou comme des connecteurs plats.

5. Bloc de raccordement selon l'une des revendications précédentes, **caractérisé en ce que** chaque contact à couteau (13) est conformé comme un élément séparé du dispositif de raccordement de conducteurs (7) correspondant.

6. Bloc de raccordement selon l'une des revendications 1 à 4, **caractérisé en ce que** chaque contact à couteau (13, 18) est formé d'un seul tenant avec la barre conductrice (9) correspondante des dispositifs de raccordement de conducteurs (7).

7. Bloc de raccordement selon l'une des revendications précédentes, **caractérisé en ce que** chaque contact à couteau (13, 18) est formé d'un seul tenant avec la barre collectrice (6) correspondante.

8. Bloc de raccordement selon l'une des revendications précédentes, **caractérisé en ce qu'**une ou plusieurs des fourches de contact/contacts tulipes (11, 12, 17) est ou sont formées d'une pièce avec la barre collectrice (6).

9. Bloc de raccordement selon l'une des revendications précédentes, **caractérisé en ce qu'**une ou plusieurs des fourches de contact/contacts tulipes (11, 12, 17) est ou sont formées d'une pièce avec la barre conductrice (9).

10. Bloc de raccordement selon l'une des revendications précédentes, **caractérisé en ce que** les dispositifs de raccordement de conducteurs (7) sont disposés de façon mobile séparément un par un par rapport à un boîtier (3) de la barre collectrice (6).

11. Bloc de raccordement selon l'une des revendications précédentes, **caractérisé en ce que** le contact à couteau (13, 18) et/ou le contact à fourche ou tulipe (11, 12, 17) est conformé comme un élément séparé de la barre conductrice (9) et de la barre collectrice (6).

12. Bloc de raccordement selon l'une des revendications précédentes, **caractérisé en ce que** le contact à couteau (13, 18) et/ou le contact à fourche ou tulipe (11, 12, 17) est conformé comme un élément mobile par rapport à la barre conductrice (9) et à la barre collectrice (6).

13. Bloc de raccordement selon l'une des revendications précédentes, **caractérisé en ce que** le contact à couteau (13, 18) ou le contact à fourche ou tulipe (11, 12, 17) est conformé comme un élément rotatif ou coulissant.

14. Bloc de raccordement selon l'une des revendications précédentes, **caractérisé en ce qu'**il est conformé comme une réglette de raccordement.
